# EUROPÄISCHE PATENTSCHRIFT

(11) **EP 2 304 418 B1**
(45) Veröffentlichungstag und Bekanntmachung des Hinweises auf die Patenterteilung: **06.03.2013**
(21) Anmeldenummer: 09777334.5
(22) Anmeldetag: 21.07.2009
(51) Int. Cl.: G01N 27/28, G01D 11/24

(54) **SENSORSYSTEM**
SENSOR SYSTEM
SYSTÈME DE DÉTECTION

(30) Priorität: 23.07.2008 DE 202008009938 U
(43) Veröffentlichungstag der Anmeldung: 06.04.2011
(73) Patentinhaber: Bürkert Werke GmbH, 74653 Ingelfingen (DE)
(72) Erfinder: OBERNDORFER, Christian, 74523 Schwäbisch Hall (DE); RUDOLPH, Katrin, 74653 Ingelfingen (DE); WINKLER, Michael, 74679 Weissbach (DE)
(74) Vertreter: Prinz & Partner
(86) Internationale Anmeldenummer: PCT/EP2009/005285
(87) Internationale Veröffentlichungsnummer: WO 2010/009863

(56) Entgegenhaltungen:
- EP-A1- 1 710 567
- WO-A1-94/19683
- WO-A1-2008/052758
- DE-A1- 4 310 607
- US-A- 6 123 820
- US-A1- 2005 014 134
- US-B2- 6 896 793

## Beschreibung

Die Erfindung betrifft ein vielseitig verwendbares Sensorsystem, das kontinuierliche Messungen von Analyten im Durchfluss ermöglicht.

Die US 6,123,820 zeigt ein modulares Sensorsystem mit einem Fluidikmodul, welches einen Durchflusskanal aufweist, einem Sensormodul und einem Gehäuse. Das Sensormodul weist Sensoren auf, welche in jeweils einem eigenem Sensorfach angeordnet sind, wobei die Sensorfächer durch Membrane verschlossen sind, welche einen Fluidstrom vom Durchflusskanal des Fluidikmoduls in die Sensorfächer des Sensormoduls verhindern.

In dem erfindungsgemäßen Sensorsystem, das in den Patentansprüchen angegeben ist, können unterschiedliche Sensorelemente eingesetzt werden, wie beispielsweise ein ISFET zur pH-Wert Bestimmung, eine Edelmetallelektrode für Redoxpotentialmessungen oder Polymermembrane zu lonenkonzentrationsmessungen.

Das System ist auch für physikalische und elektroanalytische Messungen geeignet.

Vorteilhafterweise ist das Sensorsytem modular und schichtweise aus plattenartigen Einzelteilen aufgebaut, wobei die einzelnen Schichten dichtend aber lösbar miteinander verbindbar und bei Bedarf auf einfache Weise auswechselbar sind.

Es werden ein Fluidikmodul, ein Sensormodul, ein optionales Referenzmodul und ein Deckelteil als einzelne Schichten aufeinander gestapelt.

Im Fluidikmodul befindet sich auf der Innenseite ein rillenartiger Fluidkanal mit Zulauf und Ablauf durch die Platte hindurch zu einer Außenseite, sowie einer Kanalunterbrechung zur Durchführung zur nächstfolgenden Schicht, dem Sensormodul.

Der Boden der Sensormodulschicht stellt für den Fluidkanal mit Ausnahme des kleinen Bereichs der Kanalunterbrechung eine Abdeckung dar. Dort geht der Kanal in eine spezielle Kanalkontur durch den Boden zum Sensorfach führend über, mittels welcher eine optimale Sensoranströmung erzielt wird. In bevorzugter Weise ist diese senkrecht zum Sensor, wodurch eine mögliche unerwünschte Konzentrationspolarisation des Sensors vermieden oder zumindest stark verringert wird. So wird die Messgenauigkeit und Zuverlässigkeit erhöht.

Das Sensormodul dient als Aufnahme für einen Sensor und weitere Sensoren wie beispielsweise einen Temperatursensor.

Das Sensorfach wird beim Aufsetzen der nächsten Schicht, dem Referenzmodul, durch dessen Boden verschlossen.

Ein Referenzmodul bildet zusammen mit einem Diaphragmabehälter eine Referenzelektrode.

Das Referenzmodul dient als Behälter des bei elektrochemischen Messverfahren benötigten Elektrolyten, vorzugsweise eines Gelektrolyten. Als günstig hat sich Agar-Agar erwiesen, das den zur Elektrode passenden Elektrolyt enthält (zum Beispiel 3M Kaliumchlorid-Lösung für eine Ag/ AgCl Elektrode). Um einen möglichst langen Diffusionsweg zu erhalten, kann der für den Gelelektrolyten vorgesehene Behälter mäanderförmig ausgestaltet sein.

In eine Ausnehmung im Boden des Behälters des Referenzmoduls ist ein kleines beispielsweise zylinderförmiges zu diesem hin offenes und ebenfalls mit Elektrolyt gefülltes Gefäß einsteckbar, welches in einer Bohrung durch das Sensormodul hindurch geführt wird und bis zum Fluidkanal des Fluidikmoduls ragt. In dieses Gefäß wird ein scheibenförmiges Diaphragma eingelegt. Durch eine Öffnung im Boden des zylinderförmigen Gefäßes, der Referenzelektrode, ist fluidischer Kontakt zwischen Referenzmodul und Analyt im Fluidkanal hergestellt.

In den Behälter des Referenzmoduls ragt von außen ein Referenzdraht wie Ag/ AgCl.

Das Referenzmodul wird mit einem Deckel abdichtend verschlossen.

In allen Schichten sind Ausnehmungen vorgesehen für Anschluss- und Auswerteelektronik.

Bedingt durch den modularen Aufbau des Sensorsystems lässt sich dieses jeder Zeit leicht in seine Einzelkomponenten zerlegen.

So kann der Fluidkanal, der nach Entfernen des Sensormoduls offen auf der Oberfläche des Fluidikmoduls liegt, leicht gereinigt werden.

Vor allem bei kleinem Durchmesser des Fluidkanals besteht die Gefahr, dass dieser durch im Analyt sich befindende Partikel oder durch bei Reaktion mit Reagenzien, die im Analyseverlauf zudosiert werden, ausfallende Niederschläge verstopft wird. In Systemen mit nicht zugänglichem Fluidkanal könnte ein Zusetzen des Kanals das ganze Messsystem unbrauchbar machen.

Im Sensormodul kann bei Bedarf einfach das Sensorelement ausgetauscht, gereinigt oder ersetzt werden.

Eine gealterte oder defekte Referenzelektrode kann je nach Schädigung durch Austausch des Diaphragmas im Diaphragmabehälter oder Entfernung und Neubefüllung der Gelkomponente regeneriert werden.

Genauso kann das Referenzmodul leicht gereinigt, repariert oder komplett ausgetauscht werden. Auch ist es möglich, den Elektrodendraht zu ersetzen.

Durch die kompakte und Platz sparende Bauweise ist das hier beschriebene System sowohl geeignet als separates Gerät zur Durchführung von verschiedenartigen Ionenkonzentrationsmessungen je nach verwendetem Sensorelement, als auch als Teil eines vielseitigen Analysesystems in Kombination mit anderen Teilmesssystemen, mit denen weitere physikalische Daten wie Trübungsgrad kontinuierlich und parallel oder hintereinander erfasst werden können.

Das modulare Sensorsystem eignet sich in etwas abgewandelter Form auch für nicht elektrochemische Messverfahren, bei denen keine Referenzelektrode benötigt wird. Dabei wird auf das Referenzmodul und den Diaphragmabehälter verzichtet, und die entsprechenden Bohrungen zur Befestigung oder Durchführung werden dichtend verschlossen. Das Sensormodul nimmt in dem Sensorfach den gewünschten Sensor wie zum Beispiel einen Drucksensor auf und wird direkt mit dem abschließenden Deckel verschlossen.

Die beigefügten Zeichnungen zeigen ein Ausführungsbeispiel des modularen Sensorsystems.

### Zeichnungen

- **Fig. 1**: Explosionszeichnung eines ionensensitiven Messsystems
- **Fig. 2**: Fluidikmodul
- **Fig. 3**: Sensormodul
- **Fig. 4**: Diaphragmabehälter
- **Fig. 5**: Referenzmodul
- **Fig. 6**: Deckel

### Beschreibung

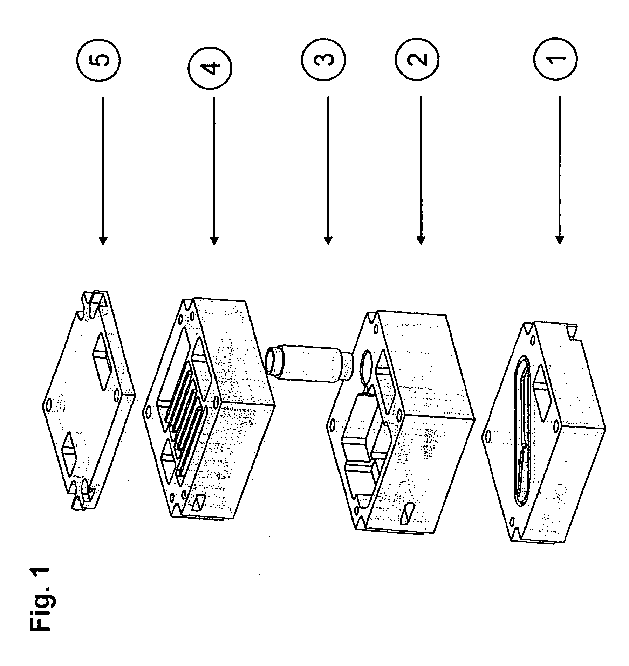

Ein elektrochemisches Sensorsystem wird modular und schichtweise, wie in Fig. 1 gezeigt, aus plattenartigen, im wesentlichen quaderförmigen Einzelkomponenten, einem Fluidikmodul 1, dem Sensormodul 2, dem Referenzmodul 4 mit zugehörigem Diaphragmabehälter 3 und einem Deckel 5 aufgebaut.

Diese Einzelkomponenten werden aufeinander gestapelt und an dafür vorgesehenen Stellen 6 fest aber lösbar miteinander verbunden. Für Serienproduktion können die Einzelkomponenten im Spritzgussverfahren aus Kunststoff hergestellt werden. Es ist aber auch spanende Fertigung möglich. Als bevorzugter Werkstoff wird ein chemisch resistenter Kunststoff eingesetzt, da im Analyseprozess vermieden werden soll, dass das zu bestimmende Medium durch unerwünschte Reaktionen mit dem Trägermaterial, zusätzliche Ionen in den Messprozess einschleppt.

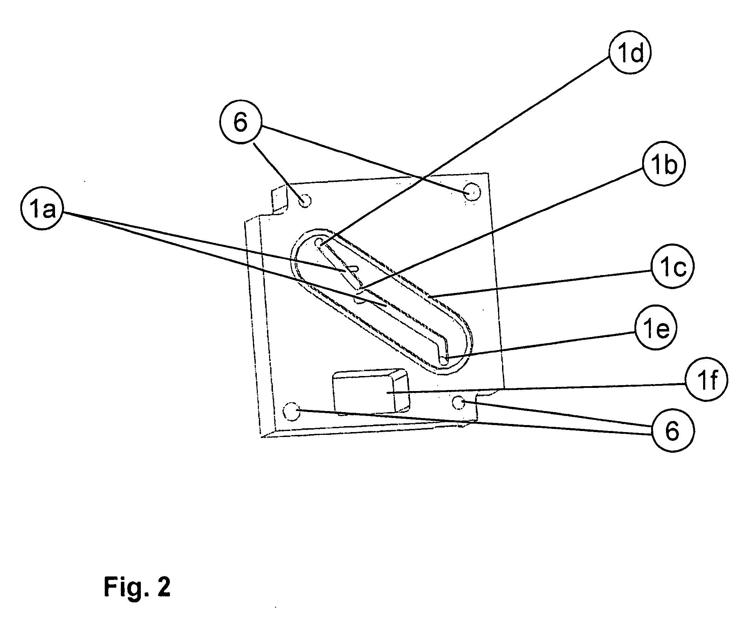

Auf der Seite des Fluidikmoduls 1, die der nächstfolgenden Schicht gegenüber liegt, ist ein Fluidkanal 1a angeordnet. Der Fluidkanal 1a führt mittels Zulauf 1d sowie Ablauf 1e auf Außenflächen des Fluidikmoduls 1. Im in Fig. 2 dargestellten Ausführungsbeispiel verläuft der rillenartige Fluidkanal 1a im Wesentlichen diagonal auf der Innenseite des Fluidikmoduls 1, und wird umgeben von der Kontur 1c, die zur Aufnahme einer Dichtung dient.

Eine Ausnehmung 1f bietet Platz für eine zur Messung benötigte Anschlusselektronik.

Die Ausnehmung 1f wird je nach Platzbedarf entsprechend der Elektronikeinheit in den anschließenden Platten fortgesetzt.

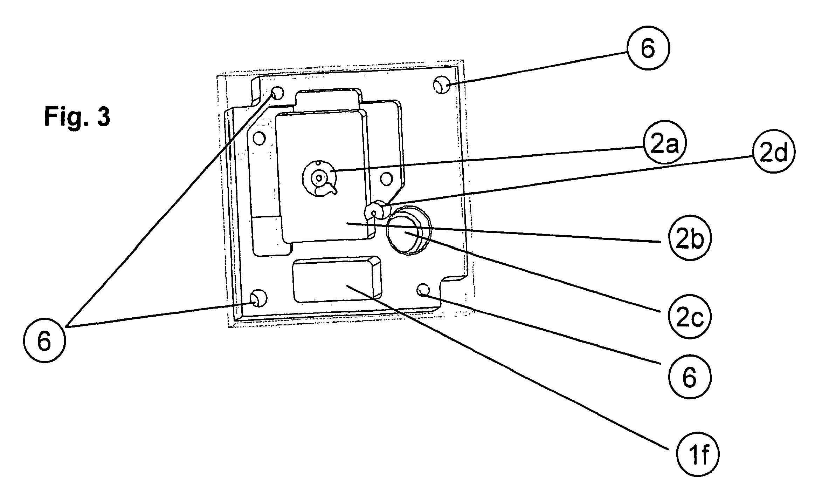

Eine Kanalunterbrechung 1 b zur Durchführung des Analyten schafft fluidische Verbindung zur Kontur 2a im Boden des Sensorfachs 2b, das Bestandteil der nächstfolgenden Schicht ist, dem Sensormodul 2, das in Fig. 3 abgebildet ist.

In das Sensorfach 2b kann je nach gewünschtem Messverfahren der entsprechende Sensor eingelegt werden - beispielsweise ein ISFET zur pH-Wert Messung. Dabei zeigt die sensitive Seite des Sensors in Richtung der Kanalkontur 2a, die so ausgestaltet ist, dass eine optimale Sensoranströmung erzielt wird. In bevorzugter Weise ist diese senkrecht zum Sensor.

Die Bohrungen 2d und 2c sind vorgesehen zur Aufnahme eines weiteren Sensors, beispielsweise eines Temperatursensors, bzw. zur Durchführung des Diaphragmabehälters 3.

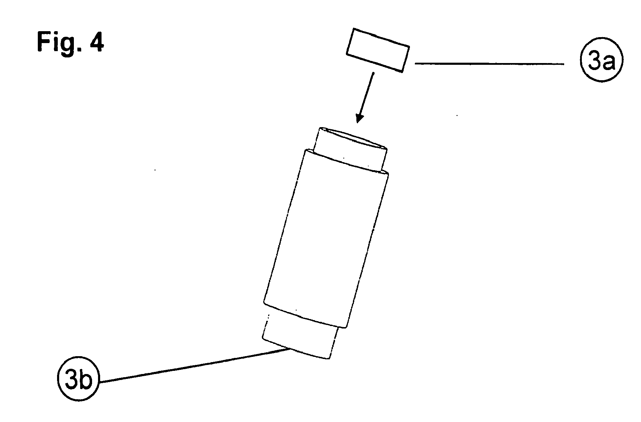

In **Fig. 4** ist der Diaphragmabehälter 3 dargestellt. Den Diaphragmabehälter 3 bildet ein aus Boden und Umhüllung bestehendes, auf der dem Boden gegenüberliegenden Seite offenes Gefäß. Im Boden des Diaphragmabehälters 3 befindet sich eine kleine Öffnung 3b als fluidische Verbindung zwischen Fluidkanal 1a und Referenzmodul 4. Im Innern des Diaphragmabehälters 3 ist oberhalb der kleinen Öffnung 3b ein Diaphragma 3a angeordnet.

Es besteht aus einem porösen Material, z.B. Glas, Keramik oder Kunststoff und gewährleistet im Betrieb fluidischen Kontakt zwischen der Referenzelektrode und dem Fluid im Fluidkanal 1a. Das Diaphragma 3a ist permeabel, dient aber gegenüber eventueller anderer, fester Bestandteile als Filter.

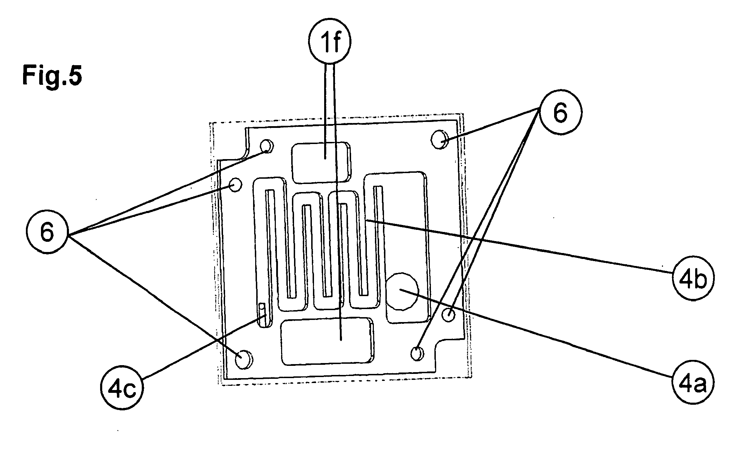

Mit seinem offenen Ende wird der Diaphragmabehälter 3 eingesetzt in die Einstecköffnung 4a des Referenzmoduls 4, dargestellt in Fig. 5. Beim Aufsetzen des Referenzmoduls 4 auf das Sensormodul 2 gelangt der Diaphragmabehälter 3 mit seinem Boden durch die Bohrung 2c bis zum Fluidkanal 1 a des Fluidikmoduls 1. Gleichzeitig wird das Sensorfach 2b mittels des Bodens des Referenzmoduls 4 abgedeckt und verschlossen.

Das Referenzmodul 4 stellt im Wesentlichen einen Behälter 4b für den zur Messung benötigten Elektrolyt dar. Der Diaphragmabehälter 3 ist ebenfalls mit Elektrolyt befüllt.

Vorzugsweise wird ein Gelelektrolyt verwendet, der als Träger Agar-Agar enthält. Agar-Agar hat den Vorteil, dass es wasserlöslich ist und fest wird.

Der Behälter 4b kann mäanderförmig ausgestaltet sein. Das hat den Vorteil eines langen Diffusionswegs. Dadurch wird die Referenzelektrode geschützt vor Eindringen von Medium aus dem Fluidkanal 1a.

In den Behälter 4b taucht ein Elektrodendraht 4d ein, welcher durch das Referenzmodul 4 auf eine Außenseite geführt wird.

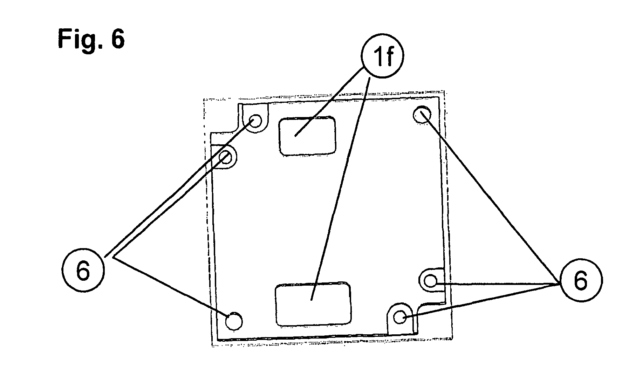

Auf das Referenzmodul 4 wird abschließend der Deckel 5 aufgesetzt, der in **Fig. 6** dargestellt ist. Im Deckel 5 sind Stellen 6 für Befestigungsmittel vorgesehen, sowie Durchführungen 1f für Anschluss- und Auswerteelektronik.

Das zu analysierende Medium gelangt vom Zulauf 1d in den Fluidkanal 1a und zur Kanalunterbrechung zur Durchführung 1 b. Anschließend wird das Medium aufgenommen von der Kontur zur Sensoranströmung 2a, kontaktiert den Sensor im Sensorfach 2b, fließt über die Kanalunterbrechung zur Durchführung 1 b zurück in den Fluidkanal 1 a und weiter zum Ablauf 1 e.

Soll zur Bestimmung weiterer physikalischer Fluideigenschaften ein nicht elektrochemisches Messverfahren angewandt werden, so entfällt im oben beschriebenen Aufbau des Sensorsystems die Referenzelektrode bestehend aus Referenzmodul 4 und Diaphragmabehälter 3.

Zum Sensorsystem werden die Teile Fluidikmodul 1, Sensormodul 2 und Deckel 5 aufeinander gestapelt, wobei Bohrungen zur Befestigung oder Durchführung des Diaphragmabehälters 3 für diese Anwendung abdichtend verschlossen werden. Das Sensorfach 2b wird dann beispielsweise mit einem Drucksensor bestückt.

## Patentansprüche

1. Modulares Sensorsystem zur kontinuierlichen Messung von Analyten im Durchlauf, mit einem Fluidikmodul (1), einem Sensormodul (2), einem optionalen Referenzmodul (4) und einem Deckelteil (5), die aufeinander gestapelt lösbar fest miteinander verbunden sind, wobei
das Fluidikmodul (1) einen Fluidkanal (1a) mit Zulauf (1d) und Ablauf (1e) und das Sensormodul (2) ein Sensorfach (2b) mit wenigstens einem Sensor aufweist,
**dadurch gekennzeichnet, dass**
das Sensorfach (2b) mit dem Fluidkanal (1a) des Fluidikmoduls (1) in Fluidverbindung steht und der Fluidkanal (1a) des Fluidikmoduls (1) eine Unterbrechung (1 b) aufweist, an der Strömungswege von und zu dem Sensorfach (2b) des Sensormoduls (2) führen,
das optionale Referenzmodul (4) über ein Diaphragma (3a) mit dem Fluidkanal (1a) des Fluidikmoduls (1) in Fluidverbindung stehen kann,
das Deckelteil (5) das Sensormodul (2) oder das Referenzmodul (4) abschließt, und
der Fluidkanal (1a) des Fluidikmoduls (1) durch eine Bodenfläche des angrenzenden Sensormoduls (2) abgeschlossen ist.

2. Sensorsystem nach einem der vorstehenden Ansprüche, bei dem das Sensorfach (2b) auf der vom Fluidikmodul (1) abgewandten Seite des Sensormoduls (2) durch eine Bodenwand des angrenzenden Referenzmoduls (4) oder durch das Deckelteil (5) abgeschlossen ist.

3. Sensorsystem nach einem der vorstehenden Ansprüche, bei dem das Referenzmodul (4) einen Elektrolytbehälter (4b) aufweist, der durch einen das Sensormodul (2) durchragenden Diaphragmabehälter (3) mit dem Fluidkanal (1 a) des Fluidikmoduls (1) verbunden ist.

4. Sensorsystem nach Anspruch 3, bei dem der Diaphragmabehälter (3) ein mit einem Elektrolyt befülltes Gefäß bildet, das zum Elektrolytbehälter (4b) des Referenzmoduls (4) hin offen ist und eine Bodenwand aufweist, auf der ein Diaphragma (3a) aufliegt und die mit einer in den Fluidkanal (1a) des Fluidikmoduls (1) mündenden Bohrung versehen ist.

5. Sensorsystem nach Anspruch 3 oder 4, bei dem der Elektrolytbehälter (4b) des Referenzmoduls (4) einen mäanderförmigen Kanal bildet.

6. Sensorsystem nach Anspruch 3, 4 oder 5, bei dem in den Elektrolytbehälter (4b) des Referenzmoduls (4) ein Elektrodendraht von außen her ragt.

7. Sensorsystem nach Anspruch 3 oder 4, bei dem die Module (1, 2, 4, 5) mit fluchtenden Ausnehmungen (1f) für Anschluß- und Auswerteelektronik versehen sind.

8. Sensorsystem nach einem der vorstehenden Ansprüche, bei dem das optionale Referenzmodul (4) für nicht elektrochemische Messungen entfällt und das Sensormodul (2) durch das Deckelteil (5) abgeschlossen wird, wobei nicht benötigte Öffnungen des Sensormoduls (2) und des Fluidikmoduls (1) dichtend verschlossen sind.

9. Sensorsystem nach einem der vorstehenden Ansprüche, bei dem die Module (1, 2, 4, 5) allgemein quaderförmig ausgebildet sind.

10. Sensorsystem nach Anspruch 9, bei dem die Module (1, 2, 4, 5) an den Ecken mit durchgehenden und fluchtend angeordneten Öffnungen (6) für Befestigungsmittel ausgebildet sind.

11. Sensorsystem nach einem der vorhergehenden Ansprüche, wobei die Fluidverbindung zwischen dem Sensorfach (2b) des Sensormoduls (2) und dem Fluidkanal (1a) des Fluidikmoduls (1) eine Kanalkontur aufweist, die eine Sensoranströmung senkrecht zum Sensor ermöglicht.

## Claims

1. A modular sensor system for continuous measurement of analytes in continuous flow, comprising a fluidic module (1), a sensor module (2), an optional reference module (4), and a cover part (5), which are stacked on top of each other and firmly connected with each other so as to be releasable, wherein
the fluidic module (1) includes a fluid duct (1a) having an inlet (1d) and an outlet (1e), and the sensor module (2) includes a sensor compartment (2b) which has at least one sensor,
**characterized in that**
the sensor compartment (2b) is in fluid communication with the fluid duct (1 a) of the fluidic module (1), and the fluid duct (1a) of the fluidic module (1) has an interruption (1 b) at which flow paths lead from and to the sensor compartment (2b) of the sensor module (2),
the optional reference module (4) is adapted to be in fluid communication with the fluid duct (1a) of the fluidic module (1) by means of a diaphragm (3a),
the cover part (5) seals the sensor module (2) or the reference module (4), and
the fluid duct (1a) of the fluidic module (1) is sealed by a bottom surface of the adjacent sensor module (2).

2. The sensor system according to any of the preceding claims, wherein the sensor compartment (2b) is sealed on the side of the sensor module (2) facing away from the fluidic module (1) by a bottom wall of the adjacent reference module (4) or by the cover part (5).

3. The sensor system according to any of the preceding claims, wherein the reference module (4) includes an electrolyte container (4b) which is connected with the fluid duct (1 a) of the fluidic module (1) by means of a diaphragm container (3) protruding through the sensor module (2).

4. The sensor system according to claim 3, wherein the diaphragm container (3) forms a vessel that is filled with an electrolyte and is open towards the electrolyte container (4b) of the reference module (4) and includes a bottom wall on which a diaphragm (3a) rests and which is provided with a borehole that opens into the fluid duct (1 a) of the fluidic module (1).

5. The sensor system according to claim 3 or 4, wherein the electrolyte container (4b) of the reference module (4) forms a meander-shaped duct.

6. The sensor system according to claim 3, 4 or 5, wherein an electrode wire projects from outside into the electrolyte container (4b) of the reference module (4).

7. The sensor system according to claim 3 or 4, wherein the modules (1, 2, 4, 5) are provided with aligned recesses (1f) for connection and evaluation electronics.

8. The sensor system according to any of the preceding claims, wherein for non-electrochemical measurements the optional reference module (4) is dispensed with and the sensor module (2) is sealed by the cover part (5), with those openings of the sensor module (2) and of the fluidic module (1) that are not required being sealingly closed.

9. The sensor system according to any of the preceding claims, wherein the modules (1, 2, 4, 5) are of a generally parallelepipedal configuration.

10. The sensor system according to claim 9, wherein the corners of the modules (1, 2, 4, 5) are designed to have continuous openings (6) arranged in alignment for fastening means.

11. The sensor system according to any of the preceding claims, wherein the fluid communication between the sensor compartment (2b) of the sensor module (2) and the fluid duct (1a) of the fluidic module (1) has a duct contour allowing a flow against the sensor that is perpendicular to the sensor.

## Revendications

1. Système de capteur modulaire pour la mesure en continu d'analytes en flux permanent, comportant un module fluidique (1), un module de capteur (2), un module de référence (4) optionnel et une pièce de recouvrement (5) qui sont empilés les uns sur les autres et reliés de manière solidaire les uns aux autres en étant détachables,
le module fluidique (1) présentant un canal de fluide (1a) qui comporte une amenée (1d) et une sortie (1e), et le module de capteur (2) présentant un compartiment de capteur (2b) qui comporte au moins un capteur,
**caractérisé en ce que**
le compartiment de capteur (2b) est en liaison fluidique avec le canal de fluide (1a) du module fluidique (1), et **en ce que** le canal de fluide (1a) du module fluidique (1) présente une interruption (1b) au niveau de laquelle des voies d'écoulement mènent depuis et vers le compartiment de capteur (2b) du module de capteur (2),
le module de référence (4) optionnel peut être en liaison fluidique avec le canal de fluide (1a) du module fluidique (1) par un diaphragme (3a),
la pièce de recouvrement (5) obture le module de capteur (2) ou le module de référence (4), et
le canal de fluide (1a) du module fluidique (1) est obturé par une surface de fond du module de capteur (2) adjacent.

2. Système de capteur selon l'une des revendications précédentes, dans lequel le compartiment de capteur (2b) est fermé du côté du module de capteur (2) détourné du module fluidique (1) par une paroi de fond du module de référence (4) adjacent ou par la pièce de recouvrement (5).

3. Système de capteur selon l'une des revendications précédentes, dans lequel le module de référence (4) présente un réservoir d'électrolyte (4b) qui est relié au canal de fluide (1a) du module fluidique (1) par un réservoir à diaphragme (3) traversant le module de capteur (2).

4. Système de capteur selon la revendication 3, dans lequel le réservoir à diaphragme (3) forme un récipient rempli d'un électrolyte qui est ouvert vers le réservoir d'électrolyte (4b) du module de référence (4) et présente une paroi de fond sur laquelle repose un diaphragme (3a) et qui est pourvue d'un perçage débouchant dans le canal de fluide (1 a) du module fluidique (1).

5. Système de capteur selon la revendication 3 ou 4, dans lequel le réservoir d'électrolyte (4b) du module de référence (4) forme un canal en méandres.

6. Système de capteur selon la revendication 3, 4 ou 5, dans lequel un fil d'électrode fait saillie dans le réservoir d'électrolyte (4b) du module de référence (4) depuis l'extérieur.

7. Système de capteur selon la revendication 3 ou 4, dans lequel les modules (1, 2, 4, 5) sont pourvus d'évidements (1f) en alignement pour l'électronique de raccordement et d'évaluation.

8. Système de capteur selon l'une des revendications précédentes, dans lequel le module de référence (4) optionnel est éliminé pour des mesures non électrochimiques et le module de capteur (2) est fermé par la pièce de recouvrement (5), des orifices du module de capteur (2) et du module fluidique (1) qui ne sont pas nécessaires étant obturés de manière étanche.

9. Système de capteur selon l'une des revendications précédentes, dans lequel les modules (1, 2, 4, 5) sont réalisés de manière généralement parallélépipédique.

10. Système de capteur selon la revendication 9, dans lequel les coins des modules (1, 2, 4, 5) sont réalisés de manière à présenter des orifices (6) ininterrompus agencés en alignement pour des moyens de fixation.

11. Système de capteur selon l'une des revendications précédentes, la liaison fluidique entre le compartiment de capteur (2b) du module de capteur (2) et le canal de fluide (1a) du module fluidique (1) présentant un contour de canal permettant un écoulement contre le capteur perpendiculairement au capteur.
